Europäisches Patentamt

European Patent Office

Office européen des brevets

(19)

(11) Veröffentlichungsnummer: **0 149 466**
**B1**

(12) **EUROPÄISCHE PATENTSCHRIFT**

(45) Veröffentlichungstag der Patentschrift:
**01.06.88**

(51) Int. Cl.⁴: **F 28 F 7/02,** F 02 B 29/04,
**F 28 F 9/00,** F 28 F 9/26

(21) Anmeldenummer: **85100162.8**

(22) Anmeldetag: **09.01.85**

(54) **Wärmetauscher für zwei Medien, insbesondere ein Ladeluftkühler für eine Brennkraftmaschine.**

(30) Priorität: **10.01.84 DE 3400519**
**10.12.84 DE 3444961**

(43) Veröffentlichungstag der Anmeldung:
**24.07.85 Patentblatt 85/30**

(45) Bekanntmachung des Hinweises auf die Patenterteilung:
**01.06.88 Patentblatt 88/22**

(84) Benannte Vertragsstaaten:
**DE FR GB IT**

(56) Entgegenhaltungen:
**WO - A - 79/00766**
**DE - A - 2 037 873**
**FR - A - 550 944**
**FR - A - 1 038 874**
**FR - A - 1 161 500**
**FR - A - 1 556 741**
**FR - A - 2 117 158**
**FR - A - 2 124 223**
**FR - A - 2 275 647**
**GB - A - 557 880**
**GB - A - 1 033 181**
**GB - A - 1 192 847**
**GB - A - 1 467 777**
**US - A - 4 335 782**

(73) Patentinhaber: **Klöckner-Humboldt-Deutz
Aktiengesellschaft,
Deutz-Mülheimer-Strasse 111 Postfach 80 05 09,
D-5000 Köln 80 (DE)**

(72) Erfinder: **Pluequet, Heinz, Dipl.-Ing., Dattenfelder
Strasse 24, D-5000 Köln 91 (DE)**

## Beschreibung

Die Erfindung bezieht sich auf einen Wärmetauscher für zwei Medien, insbesondere Ladeluftkühler, für eine Brennkraftmaschine mit in einem geschlossenen Gehäusemantel angeordneten Kühlerblock, und daran gegenüberliegend anschliessenden Räumen zum Verteilen bzw. Sammeln der innerhalb des Kühlerblockes quer zueinander durch Kanäle strömenden beiden Medien, wobei die beiden Räume für das Kühlmedium durch seitlich am Gehäusemantel angebrachte Verteiler- bzw. Sammelkästen gebildet und die Räume für das zu kühlende Medium innerhalb des Gehäusemantels beiderseits des Kühlerblockes angeordnet sind.

Aus der DE-A-20 37 873 ist ein Wärmetauscher bekannt geworden, der in einem zylindrischen Gehäuse mittig ein axial verlaufendes Rohrbündel aufweist, das zwischen zwei Leitwänden liegt. Die einzelnen Rohre sind beiderseits in Rohrböden gehalten, welche den Gehäusemantel seitlich abdichten. Zum seitlichen Abschluss des Gehäusemantels dienen an dessen Stirnseite befestigte, nach aussen gewölbte Deckel, deren mit den Rohrböden gebildeten Innenräume dem durch das Rohrbündel zu leitenden Medium als Verteiler bzw. um Umlenken dienen. Für das quer durch das Rohrbündel zu führende Medium sind im Gehäusemantel für dessen Zu- und Ablauf radiale Rohrstutzen vorgesehen, die mit je einem durch die inneren Leitwände gegenüber dem Rohrbündel abgegrenzten Verteiler- bzw. Sammelraum in Verbindung stehen. Bei diesem bekannten Wärmetauscher ist der Wärmeaustausch zwischen den beiden Medien nur im Bereich der gebündelten Rohre möglich, während der Gehäusemantel an diesem Vorgang keinen Anteil hat. Vielmehr wird die vom Gehäusemantel aufgenommene Wärme nach aussen abgestrahlt, so dass gegebenenfalls ein besonderer Berührungsschutz bzw. eine thermische Isolation erforderlich ist.

Ferner ist aus der GB-PS 557 880 ein Wärmetauscher bekannt geworden, der für eine industrielle Verwendung bestimmt ist und aus einer ortsfesten Anordnung einer Vielzahl rohrförmiger Elemente aus Metall besteht. In dem Wärmetauscher soll Luft erhitzt werden, die von oben her auf einem U-förmigen Weg durch die rohrförmigen Elemente des Wärmetauschers hindurchgeleitet wird. Zur Erhitzung der Luft dienen heisse Gase, beispielsweise Gichtgas, das quer zur Strömungsrichtung der Luft getrennt von dieser durch Kanäle des Wärmetauschers geführt wird. Im unteren Umlenkbereich für die Luft hat der bekannte Wärmetauscher einen einfachen Gehäusemantel, der am Wärmetausch zwischen den beiden Medien keinen Anteil hat. Auch hierbei wird die vom Gehäusemantel aufgenommene Wärme in unerwünschter Weise nach aussen abgegeben.

Der Erfindung liegt die Aufgabe zugrunde, einen Wärmetauscher der eingangs umrissenen Art zu schaffen, bei dem mit einfachen Mitteln ein möglichst guter Wärmeübergang von einem Medium zum anderen erzielt wird. Ausserdem soll die vom Gehäusemantel aufgenommene Wärme möglichst gering sein, um Verformungen desselben sowie unerwünschte Abstrahlungen zu vermeiden.

Die Aufgabe wird erfindungsgemäss dadurch gelöst, dass der Gehäusemantel des Wärmetauschers aus zwei U-förmigen, aus einem inneren und einem äusseren Blech bestehenden Formteilen zusammengesetzt ist, wobei zwischen den Blechen stabförmige Elemente zur Bildung der Kanäle für das Kühlmedium angeordnet sind und dass der Kühlerblock in der gleichen Sandwich-Bauweise wie der Gehäusemantel hergestellt ist.

Durch diese Massnahmen wird dem zu kühlenden Medium auch in den dem Kühlerblock vor- bzw. nachgeschalteten Räumen zum Verteilen, Umlenken bzw. Sammeln des Mediums zusätzlich Wärme durch das Kühlmedium entzogen, so dass sich eine bessere Kühlwirkung ergibt. Ferner wird eine unzulässig starke Erwärmung des äusseren Gehäusemantels vermieden.

Ferner kann es zweckdienlich sein, wenn das Gehäuse des Wärmetauschers im Verlauf seiner Längenerstreckung durch eine Biegung im Querschnitt winkel- oder U-förmig ausgebildet ist, wobei im Bereich der Biegung innerhalb des Gehäuses ein Umlenkraum für das zu kühlende Medium vorhanden ist, den beiderseits Teile eines zweiteiligen Kühlerblockes begrenzen.

Schliesslich ist es vorteilhaft, wenn im Umlenkraum des Wärmetauschers Leitbleche und/oder vom Kühlmittel durchströmte Kühlrippen vorgesehen sind.

Ein Ausführungsbeispiel der Erfindung wird im folgenden anhand der Zeichnung näher beschrieben. Es zeigt:

Fig. 1 einen Schnitt durch einen Ladeluftkühler gemäss der Linie I–I in Fig. 2;

Fig. 2 einen Schnitt nach der Linie II–II in Fig. 1;

Fig. 3 im Schnitt eine Ausführungsform einer Biegekante am äusseren Gehäusemantel.

Fig. 4 einen Schnitt durch einen U-förmigen Ladeluftkühler gemäss der Erfindung

Fig. 5 ein anderes Ausführungsbeispiel.

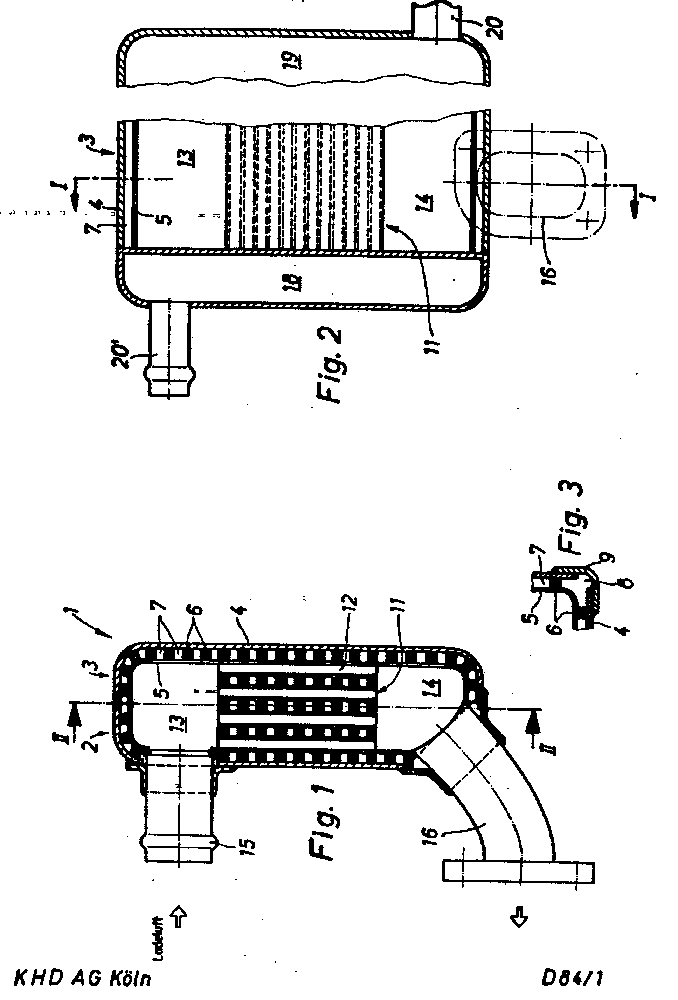

Der in den Fig. 1 und 2 gezeigte Wärmetauscher stellt einen Ladeluftkühler für eine Brennkraftmaschine dar, bei dem Wasser als Kühlmedium verwendet wird. Der Ladeluftkühler hat einen kastenförmigen Gehäusemantel 1, der gemäss Fig. 1 aus zwei U-förmigen Formteilen 2 und 3 zusammengefügt ist. Die beiden Formteile 2 und 3 sind in Sandwich-Bauweise entweder in der gezeigten U-Form hergestellt oder in einem besonderen Arbeitsgang an gegenüberliegenden Enden so nach innen umgebogen, dass sie zusammengefügt einen geschlossenen Kastenquerschnitt gemäss Fig. 1 ergeben. Der Gehäusemantel 1 besteht aus einem äusseren Blech 4 und einem dazu mit Abstand befindlichen inneren Blech 5, zwischen denen ebenfalls mit Abstand voneinander stabförmige, im Querschnitt vorzugsweise quadratische Elemente 6 angeordnet sind. Zwischen den einzelnen Elementen 6 verbleiben durchgehende Hohlräume 7 für den Durchtritt des Kühlmittels.

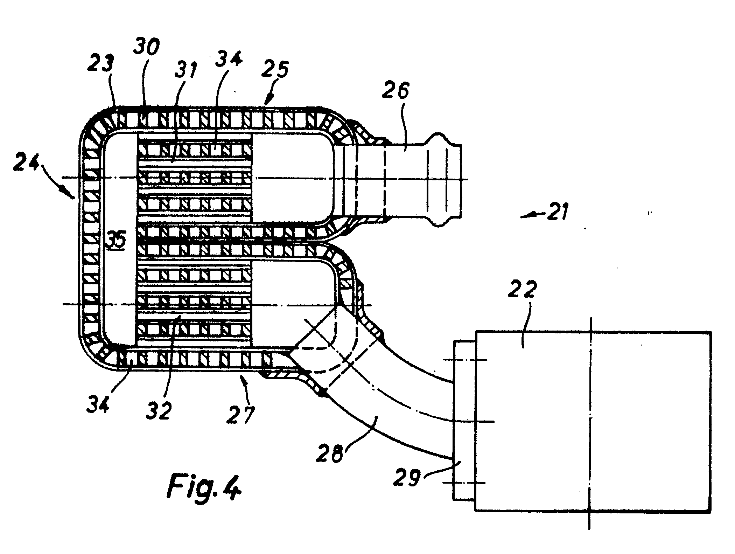

Zum Biegen der Formteile 2 und 3 kann es zweckdienlich sein, wenn das äussere Blech 4 vor dem Biegen an der Biegekante durchtrennt wird. Nach dem Arbeitsvorgang wird dann der beim Biegen an der Biegekante entstehende Spalt 8 durch ein aufgesetzes Winkelblech 9 gemäss Fig. 3 abgedichtet.

Innerhalb des kastenförmigen Gehäusemantels 1 befindet sich ein an diesen eng anschliessender Kühlerblock 11, der in gleicher Sandwich-Bauweise hergestellt ist wie der Gehäusemantel 1. Durch den Kühlerblock 11 durchgehende Kanäle fü die zu kühlende Ladeluft sind mit 12 bezeichnet. Oberhalb und unterhalb des Kühlerblockes 11 sind im Gehäusemantel 1 Räume 13 bzw. 14 angeordnet, die sich über die Länge und Breite des angrenzenden Kühlerblockes 11 erstrecken. Der obere Raum 13 ist mit einem Lufteintrittsstutzen 15 verbunden, der im Formteil 2 befestigt ist. Dieser Raum 13 dient zum Verteilen der angesaugten Ladeluft auf die Fläche des angrenzenden Kühlerblocks 11. Der untere Raum 14 steht mit einem ebenfalls im Formteil 2 befestigten Luftausgangsstutzen 16 in Verbindung und dient zum Sammeln der den Kühlerblock 11 verlassenden Ladeluft, bevor diese in den Stutzen 16 eintritt.

An den Gehäusemantel 1 schliessen sich gemäss Fig. 2 beiderseits je ein Kasten 18, 19 an, die sich über die volle Höhe und Breite des Gehäusemantels 1 erstrecken. Die Kästen 18, 19, die für die Verteilung und Ableitung des Kühlwassers dienen, sind mit je einem Stutzen 20 bzw. 21 für den Zulauf bzw. den Ablauf des Kühlwassers ausgestattet. Bei entsprechender Ausbildung kann einer der Kästen 18 bzw. 19 auch als Umlenkdeckel dienen.

Das Kühlwasser tritt durch den Stutzen 20 in den Kasten 19 ein und wird hier auf die einzelnen Hohlräume 7 im Kühlerblock 11 sowie im Gehäusemantel 1 zum Durchströmen derselben verteilt. Das sich im Raum 18 nach dem Durchströmen der genannten Hohlräume 7 sammelnde Kühlwasser fliesst durch den Stutzen 20' wieder in den Kühlkreislauf der Brennkraftmaschine. Die zu kühlende Ladeluft gelangt durch den Stutzen 15 in das Innere des Wärmetauschers, wo nicht nur im Kühlerblock 11 sondern auch in den Räumen 13 und 14 eine Abkühlung der Ladeluft erfolgt. Die gekühlte Ladeluft strömt schliesslich durch den Stutzen 16 zu den Zylinderköpfen einer nicht dargestellten Brennkraftmaschine.

Durch diese Ausbildung eines Ladeluftkühlers ergibt sich bei einem relativ geringen Gewicht eine hohe Formstabilität, was sowohl in bezug auf mechanische Beanspruchungen als auch auf den Ladeluftinnendruck gilt. Ausserdem werden thermische Spannungen dadurch vermieden, dass die gesamte Aussenwandung des Gehäusemantels ständig vom Kühlwasser durchströmt wird.

Der in Fig. 4 im Querschnitt gezeigte Wärmetauscher ist als Ladeluftkühler an die Luftzuführung 22 zum Zylinderkopf einer Brennkraftmaschine angeschlossen. Der Ladeluftkühler ist von einem Gehäuse 23 umschlossen, das infolge einer mittigen Biegung 24 einen im wesentlichen U-förmigen Querschnitt aufweist, wobei an den einen Schenkel 25 der U-Form der Eintritt der Ladeluft in den Kühler durch einen Stutzen 26 erfolgt. Ein am anderen Schenkel 27 des Kühlers sitzender Stutzen 28 führt die gekühlte Ladeluft zur Brennkraftmaschine. Als wesentliches Tragelement des Ladeluftkühlers 1 dient der Stutzen 28, der sehr kräftig ausgebildet ist und über einen Flansch 29 mit der Luftzuführung 22 verschraubt ist. Ein das Gehäuse 23 bildender doppelwandiger Mantel 30 ist insgesamt in Sandwich-Bauweise ausgeführt und zweckmässig aus zwei für sich U-förmigen Schalen zusammengefügt. Im Gehäuse 23 des Ladeluftkühlers 21 befindet sich in jedem der Schenkel 25 und 26 je eine Hälfte eines zweiteiligen Kühlerblockes 31, 32, die ebenfalls in Sandwich-Bauweise ausgeführt sind. Die dabei sowohl im Gehäusemantel 1 als auch in den Kühlerblöcken 31 und 32 verbleibenden durchgehenden Hohlräume 34 sind für den Durchtritt des Kühlmittels vorgesehen, welches somit quer zur Ladeluft den Kühler durchströmt. Ein im Strömungsverlauf zwischen den beiden Kühlerblöcken 31 und 32 im Innern der Biegung 24 befindlicher freier Raum 35 dient als Umlenkraum für die den Kühler durchströmende Ladeluft. Im Umlenkraum 35 können bei Bedarf zusätzlich Leitbleche und/oder vom Kühlmittel durchströmte Kühlrippen angeordnet sein. Dieser Ladeluftkühler hat durch die gegebene U-Form eine sehr kompakte Bauweise, so dass er wenig Bauraum beansprucht.

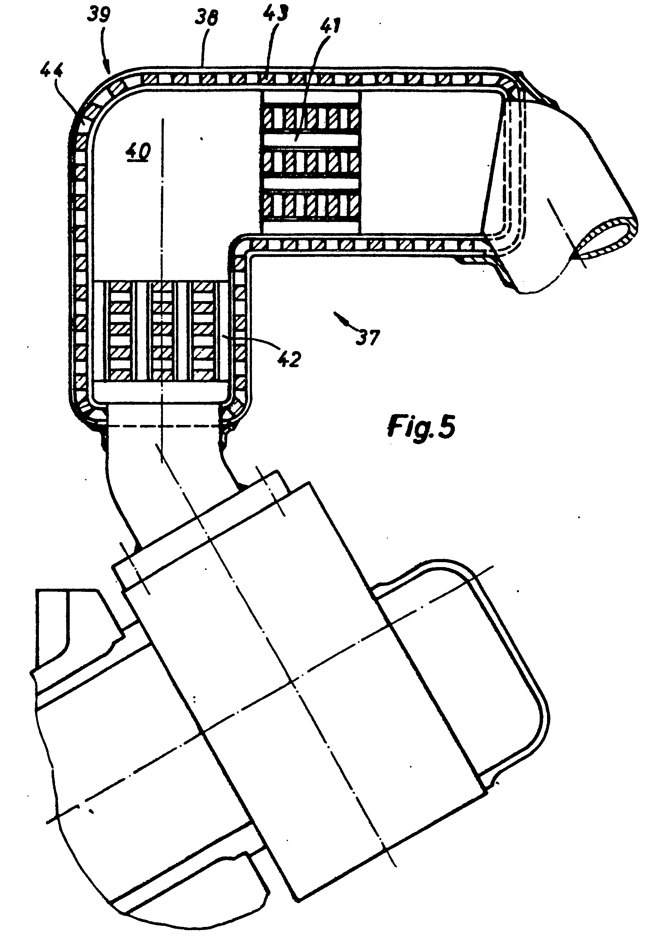

Der in Fig. 5 gezeigte Ladekühler 37 hat grundsätzlich die gleiche Bauweise wie der Ladeluftkühler 21 in Fig. 4. Der Ladeluftkühler 37 hat lediglich eine andere Querschnittsform, wobei im Gehäuse 38 durch eine Biegung 39 eine Abwinklung von 90° vorgesehen ist. Hierdurch ergibt sich im Inneren des Kühlers ein Umlenkraum 40, in dem die Ladeluft in Strömungsrichtung hinter dem Kühlerblock 41 um 90° umgelenkt wird, bevor die Ladeluft durch den anderen Kühlerblock 42 zur Brennkraftmaschine gelangt. Bei dieser Ausführung eines Ladeluftkühlers ist der Gehäusemantel 43 ebenfalls in seiner ganzen Erstreckung mit durchgehenden Hohlräumen 44 zum Durchströmen des Kühlmittels versehen. Die in Fig. 5 gezeigte abgewinkelte Form eines Ladeluftkühlers 37 eignet sich insbesondere für solche Brennkraftmaschinen, deren Zylinder in V-Form angeordnet sind.

**Patentansprüche**

1. Wärmetauscher für zwei Medien, insbesondere Ladeluftkühler, für eine Brennkraftmaschine mit in einem geschlossenen Gehäusemantel (1) angeordneten Kühlerblock (11) und daran gegenüberliegend anschliessenden Räumen (13, 14, 18, 19) zum Verteilen bzw. Sammeln der innerhalb des Kühlerblockes (11) quer zueinander durch Kanäle (7, 12) strömenden beiden Medien, wobei die beiden Räume für das Kühlmedium durch seitlich am Gehäusemantel (1) angebrachte Verteiler- bzw. Sammelkästen (18, 19) gebildet und die Räume (13, 14) für das zu kühlende Medium innerhalb des Gehäusemantels (1) beiderseits des Kühlerblockes angeordnet sind, dadurch gekennzeichnet, dass der Gehäusemantel (1) des Wärmetauschers aus zwei U-förmigen, aus einem inneren (5) und einem äusseren Blech (4) bestehenden, Formteilen (2, 3)zusammengesetzt ist, wobei zwischen den Blechen (4, 5) stabförmige Elemente (6) zur Bildung der Kanäle (7) für das Kühlmedium angeordnet sind und dass der Kühlerblock (11) in der gleichen Sandwich-Bauweise wie der Gehäusemantel (1) hergestellt ist.

2. Wärmetauscher nach Anspruch 1, dadurch gekennzeichnet, dass das Gehäuse (23 bzw. 26) des Wärmetauschers (21 bzw. 37) im Verlauf seiner Längenerstreckung durch eine Biegung (24 bzw. 39) im Querschnitt winkel- oder U-förmig ausgebildet ist, dass im Bereich der Biegung (24 bzw. 39) innerhalb des Gehäuses (23 bzw. 38) ein Umlenkraum (35 bzw. 40) für das zu kühlende Medium vorhanden ist, den beiderseits Teile eines zweiteiligen Kühlerblockes (31, 32 bzw. 41, 42) begrenzen.

3. Wärmetauscher nach Anspruch 1 oder 2, dadurch gekennzeichnet, dass im Umlenkraum (35 bzw. 40) des Wärmetauschers (21 bzw. 37) Leitbleche und/oder vom Kühlmittel durchströmte Kühlrippen vorgesehen sind.

**Revendications**

1. Refroidisseur d'air pour deux fluides, en particulier refroidisseur d'air d'admission, pour un moteur à combustion interne avec un bloc refroidisseur (11) disposé dans une enveloppe de carter (1) fermée et des enceintes (13, 14) raccordées de manière opposée, pour la répartition, respectivement en collecteur des deux fluides qui s'écoulent à l'intérieur du bloc refroidisseur (11), transversalement entre eux, par des canaux (7, 12), les deux enceintes pour le fluide de réfrigération étant à cette occasion formées de caissons de répartition, respectivement en collecteur (18, 19), adjoints latéralement à l'enveloppe du carter et les enceintes (13, 14) pour le fluide à refroidir étant disposées des deux côtés du bloc refroidisseur, à l'intérieur de l'enveloppe de carter (1), caractérisé en ce que l'enveloppe de carter (1) de l'échangeur de chaleur est composé de deux pièces profilées (2, 3) en forme de U, composées d'une tôle intérieure (5) et d'une tôle extérieure (4), des éléments en forme de barre (6) étant à cette occasion disposés entre les tôles (4, 5) pour former les canaux (7) pour le fluide de refroidissement et en ce que le bloc refroidisseur (11) est fabriqué selon la même technique de construction que l'enveloppe de carter (1).

2. Echangeur de chaleur selon la revendication 1, caractérisé en ce que le carter (23), respectivement (26) de l'échangeur de chaleur (21), respectivement (37) est conformé dans le déroulement de son développement par un coude (24), respectivement (39), qui est de section en forme d'angle ou de U, en ce qu'au voisinage du coude (24), respectivement (39), à l'intérieur du carter (23), respectivement (38), existe une enceinte de déviation (35), respectivement (40), our le fluide à refroidir, que délimitent les deux côtés, les pièces d'un bloc refroidisseur en deux parties (31, 32) respectivement (41, 42).

3. Echangeur de chaleur selon la revendication 1 ou 2, caractérisé en ce que des tôles de déflexion et/ou des ailettes de refroidissement, parcourues par le fluide refroidisseur, sont prévues dans l'enceinte de déviation (35), respectivement (40) de l'échangeur de chaleur (21), respectivement (37).

**Claims**

1. A heat exchanger for two media, especially a supercharger intercooler for an internal combustion engine, with a cooling block (11) arranged in a closed housing case (1) and adjoining spaces (13, 14, 18, 19) lying opposite it to distribute or respectively collect the two media flowing transversely to each other within the cooling block (11) through channels (7, 12), wherein the two-spaces for the cooling medium are formed by distribution or, respectively, collecting tanks (18, 19) mounted laterally on the housing case (1), and the spaces (13, 14) for the medium which is to be cooled are arranged within the housing case (1) on both sides of the cooling block, characterised in that the housing case (1) of the heat exchanger is composed of two U-shaped formed parts (2, 3) comprising an inner sheet (5) and an outer sheet (4) with rod-shaped elements (6) being arranged between the sheets (4, 5) to form the channels (7) for the cooling medium, and that the cooling block (11) is produced in the same sandwich type of construction as the housing case (1).

2. A heat exchanger according to Claim 1, charactersied in that the housing (23, or respectively, 26) of the heat exchanger 21 or, respectively, 37) is so constructed, in the course of its longitudinal extent, as to be angular or U-shaped in cross-section by means of a bend (24, or, respectively, 39) and that, in the region of the bend (24 or, respectively, 39) within the housing (23, or, respectively, 38) there is a deflection space (35 or, respectively, 40) for the medium to be cooled which is bounded on both sides by parts of a two-part cooling block (31, 32 or, respectively, 41, 42).

3. A heat exchanger according to Claim 1 or 2, characterised in that in the deflection space (35 or, respectively, 40) of the heat exchanger (21 or, respectively, 37) baffle plates and/or cooling ribs through which cooling medium flows are provided.

0 149 466

1/3

Fig. 2

Fig. 3

Fig. 1

KHD AG Köln

D84/1

Fig.4

Fig.5